# EUROPÄISCHE PATENTANMELDUNG

(11) **EP 2 787 266 A1**
(43) Veröffentlichungstag der Anmeldung: **08.10.2014**
(21) Anmeldenummer: 14163178.8
(22) Anmeldetag: 02.04.2014
(51) Int. Cl.: F16L 37/22

(54) **Verbindungseinheit**

(30) Priorität: 04.04.2013 DE 102013205964
(71) Anmelder: Fränkische Industrial Pipes GmbH & Co. KG, 97486 Königsberg (DE)
(72) Erfinder: Schröter, Sören, 96103 Hallstadt (DE); Schröter, Dirk, 96047 Bamberg (DE)
(74) Vertreter: Herzog, Markus

(57) **Zusammenfassung**

Die Erfindung betrifft eine Verbindungseinheit (10), welche umfasst:
einen Grundkörper (12); einen Anschlussstutzen (14); eine Mehrzahl von Verriegelungselementen (18), wobei in der Umfangswandung (12b) des Grundkörpers (12) eine Mehrzahl von zur Aufnahme der Verriegelungselemente (18) bestimmten Durchbrechungsbereichen (28a) vorgesehen ist, innerhalb welcher die Umfangswandung wenigstens abschnittsweise durchbrochen ist, und zwischen denen in Umfangsrichtung vollständig durchbrechungsfreie Umfangsabschnitte (28b) vorgesehen sind, wobei der Anschlußstutzen (14) wenigstens eine Vertiefung (44) aufweist, in welche die \/erriegelungselemente (18) im verbundenen Zustand der Verbindungseinheit (10) zur Herbeiführung eines verbundenen und verriegelten Zustands der Verbindungseinheit (10) einführbar sind; und eine den Grundkörper (12) umgreifende Schiebehülse (16), welche zwischen einer Freigabestellung und einer Verriegelungsstellung bewegbar ist. Die Verbindungseinheit (10) ist dadurch gekennzeichnet, dass der Grundkörper (12) aus Kunststoff gefertigt ist und sich die Durchbrechungsbereiche (28a) in der Umfangswandung des Grundkörpers (12) in Umfangsrichtung insgesamt über höchstens 240° erstrecken, wobei die durchbrechungsfreien Umfangsabschnitte (28b) eine Umfangserstreckung von jeweils wenigstens 40° aufweisen.

## Beschreibung

Die Erfindung betrifft eine Verbindungseinheit, die einen Grundkörper umfasst, welcher einen Verbindungsabschnitt mit einer Umfangswandung und einer von dieser umgrenzten Verbindungsausnehmung aufweist, ferner einen Anschlussstutzen umfasst mit einem Gegenverbindungsabschnitt, welcher zur Herbeiführung eines verbundenen Zustands der Verbindungseinheit in die Verbindungsausnehmung einführbar ist, zudem eine Mehrzahl von Verriegelungselementen umfasst, wobei in der Umfangswandung des Grundkörpers eine Mehrzahl von zur Aufnahme der Verriegelungselemente bestimmten Durchbrechungsbereichen vorgesehen ist, innerhalb welcher die Umfangswandung wenigstens abschnittsweise durchbrochen ist, und zwischen denen in Umfangsrichtung vollständig durchbrechungsfreie Umfangsabschnitte vorgesehen sind, und wobei der Gegenverbindungsabschnitt des Anschlusstutzens wenigstens eine Vertiefung aufweist, in welche die Verriegelungselemente im verbundenen Zustand der Verbindungseinheit zur Herbeiführung eines verbundenen und verriegelten Zustands der Verbindungseinheit einführbar sind, und schließlich auch noch eine den Grundkörper umgreifende Schiebehülse umfasst, welche in Richtung der Verbindungsrichtung zwischen einer Freigabestellung und einer Verriegelungsstellung bewegbar ist, wobei die in ihrer Verriegelungsstellung angeordnete Schiebehülse im verbundenen Zustand der Verbindungseinheit den Eingriff der Verriegelungselemente in die wenigstens eine Vertiefung des Gegenverbindungsabschnitts und somit den verbundenen und verriegelten Zustand der Verbindungseinheit sichert und wobei die in der Freigabestellung angeordnete Schiebehülse im verbundenen Zustand der Verbindungseinheit eine Bewegung der Verriegelungselemente aus der wenigstens einen Vertiefung des Gegenverbindungsabschnitts heraus und somit die Überführung der Verbindungseinheit in einen nicht verbundenen Zustand zulässt.

Derartige Verbindungseinheiten sind im Stand der Technik allgemein bekannt und zeichnen sich durch hohe Haltekraft aus. Aufgrund der komplexen Gestalt insbesondere des Grundkörpers sind sie jedoch in der Herstellung aufwändig und kostspielig.

Es ist daher Aufgabe der vorliegenden Erfindung, die Verbindungseinheit der eingangs genannten Art derart weiterzubilden, dass sie einfacher und kostengünstiger herstellbar ist.

Diese Aufgabe wird erfindungsgemäß durch eine Verbindungseinheit der eingangs genannten Art gelöst, bei welcher der Grundkörper aus Kunststoff gefertigt ist und sich die Durchbrechungsbereiche in der Umfangswandung des Verriegelungsabschnitts des Grundkörpers in Umfangsrichtung insgesamt über höchstens 240° erstrecken, wobei die durchbrechungsfreien Umfangsabschnitte eine Umfangserstreckung von jeweils wenigstens 40° aufweisen. Als "durchbrechungsfrei" wird dabei ein Umfangsabschnitt im Zusammenhang mit der vorliegenden Erfindung erst dann angesehen, wenn er sich in Umfangsrichtung über eine Länge erstreckt, die größer ist als die Erstreckung eines Verriegelungselements in Umfangsrichtung.

Obgleich sich die Durchbrechungsbereiche, in welchen die Verriegelungselemente aufgenommen sind, bei der erfindungsgemäßen Verriegelungseinheit in Umfangsrichtung insgesamt lediglich über höchstens 240° erstrecken, kann eine ausreichend hohe Haltekraft sichergestellt werden. Darüber hinaus ermöglicht die Zusammenfassung der Verriegelungselemente zu Gruppen, die voneinander mittels durchbrechungsfreier Umfangsabschnitte mit einer Umfangserstreckung von jeweils wenigstens 40° getrennt sind, die Herstellung des Grundkörpers im Spritzgussverfahren mittels einer Spritzgussform, welche lediglich mit einer begrenzten Anzahl von Formkernen ausgebildet zu sein braucht. Insbesondere diese Herstellbarkeit des Grundkörpers als Spritzgussteil ist es, die die einfache und kostengünstige Herstellung der erfindungsgemäßen Verriegelungseinheit ermöglicht.

In einer vorteilhaften Ausführungsform können in der Umfangswandung des \/erriegelungsabschnitts des Grundkörpers zwei sich diametral gegenüberliegende Durchbrechungsbereiche für Verriegelungselemente vorgesehen sein, von denen sich jeder in Umfangsrichtung über einen Winkel von zwischen 45° und 120° erstreckt. Die ermöglicht eine Fertigung mittels eines besonders einfachen, insbesondere zweigeteilten, Spritzgusswerkzeugs.

Jeder der Durchbrechungsbereiche kann dazu ausgebildet sein, eine Mehrzahl von Verriegelungselementen aufzunehmen. Durch diese Maßnahme ist es möglich, die Verriegelungselemente in Umfangsrichtung dichter aufeinanderfolgen zu lassen, d.h. dichter zu packen, was zu einer höheren Haltekraft der Verbindungseinheit führt. Zur Erhöhung der Formstabilität der Durchbrechungsbereiche ist es dabei ferner möglich, dass jeder der Durchbrechungsbereiche wenigstens zwei durch einen schmalen Steg voneinander getrennte Durchbrechungen umfasst ist. Dabei kann in jeder der Durchbrechungen ebenfalls eine Mehrzahl von Verriegelungselementen aufgenommen sein. Im Zusammenhang mit der vorstehenden Erläuterung des Begriffs "durchbrechungsfrei" ist festzuhalten, dass der schmale Steg keinen durchbrechungsfreien Umfangsabschnitt bildet, weil er "schmal" ist, d.h. weil seine Erstreckung in Umfangsrichtung kleiner ist als die Erstreckung eines Verriegelungselements in Umfangsrichtung, vorzugsweise kleiner als die Hälfte der Erstreckung eines Verriegelungselements in Umfangsrichtung.

Um die Herstellung der Verbindung von Anschlussstutzen und Grundkörper vereinfachen zu können, kann der Anschlussstutzen im verbundenen Zustand der Verbindungseinheit mit einer axial gerichteten Anlagefläche einer zugeordneten Gegenfläche des Grundkörpers derart zusammenwirken, dass die in den Durchbrechungen aufgenommenen Verriegelungselemente in axialer Richtung zu der wenigstens einen Vertiefung ausgerichtet sind. Hierdurch kann verhindert werden, dass der Anschlussstutzen während des Vorgangs des Verbindens zu tief in den Grundkörper eingeführt wird.

Um die Herstellung der Verbindung von Anschlussstutzen und Grundkörper weiter vereinfachen zu können, kann der Anschlussstutzen derart ausgeführt sein, dass die wenigstens eine Vertiefung zur Aufnahme der Verriegelungselemente als Nut ausgebildet ist, welche sich über den gesamten Umfang des Gegenverbindungsabschnitts erstreckt. Durch diese Ausgestaltung kommt es nämlich beim Zusammenführen von Anschlussstutzen und Grundkörper nicht mehr auf deren Relativverdrehstellung um die Montagerichtung an.

Grundsätzlich ist es aber auch denkbar, in dem Gegenverbindungsabschnitt eine Mehrzahl von Vertiefungen zur Aufnahme der Verriegelungselemente vorzusehen. Dies ist insbesondere dann vorteilhaft, wenn der spezififsche Anwendungsfall eine vorbestimmte Relativverdrehstellung um die Montagerichtung erfordert. In diesem Fall ist es ferner vorteilhaft, wenn eine Anlagefläche des Anschlussstutzens und die zugeordnete Gegenfläche des Grundkörpers derart ausgebildet sind, dass das Einführen des Anschlussstutzens in die Verbindungsausnehmung des Grundkörpers bis zu der gewünschten Einführtiefe nur bei einer vorbestimmten Relativverdrehstellung zwischen Grundkörper und Anschlussstutzen möglich ist, oder/und dass die Anlagefläche und die Gegenanlagefläche als zusammenwirkende Einweisungsschrägflächen ausgebildet sind. Beide Varianten zeichnen sich dadurch aus, dass bei Erreichen der vollständigen Einführtiefe die Vertiefungen des Gegenverbindungsabschnitts des Anschlussstutzens zu den Durchbrechungsbereichen nicht nur in axialer Richtung, sondern auch in Umfangsrichtung ausgerichtet sind.

In einer vorteilhaften Ausführungsform kann die Fläche der Mündungsöffnung der Durchbrechung an der radial inneren Seite der Umfangswandung des Grundkörpers kleiner sein als die größte Querschnittsfläche der Verriegelungselemente. Durch diese bauliche Maßnahme kann in einfacher Weise verhindert werden, dass die Verriegelungselemente im nicht-verbundenen Zustand von Grundkörper und Anschlussstutzen nach radial innen aus den Durchbrechungsbereichen herausfallen.

Um ein unbeabsichtigtes Abfallen der Schiebehülse vom Grundkörper und somit einen unbeabsichtigten Verlust der Schiebehülse verhindern zu können, wird vorgeschlagen, dass die Schiebehülse wenigstens ein Rastelement aufweist, welches mit einem zugeordneten Rastanschlag des Grundkörpers zusammenwirkt.

Ferner kann die Verbindungseinheit eine Druckfeder umfassen, welche sich einenends am Grundkörper und andernends an der Schiebehülse abstützt und die Schiebehülse in deren Verriegelungsstellung vorspannt. Mittels der Vorspannung dieser Feder kann ein unbeabsichtigtes Lösen der Verbindung von Anschlussstutzen und Grundkörper verhindert werden.

In Weiterbildung der Erfindung wird vorgeschlagen, dass die Schiebehülse wenigstens zwei axiale Abschnitte umfasst, wobei die Innenwand der Schiebehülse in einem ersten axialen Abschnitt zumindest in einem den Durchbrechungen zugeordneten Umfangsabschnitt weiter nach radial innen vorsteht als die Innenwand der Schiebehülse in einem zweiten axialen Abschnitt, und zwar vorzugsweise derart, dass die Schiebehülse in ihrer Verriegelungsstellung mit ihrem ersten axialen Abschnitt den Eingriff der Verriegelungselemente in die wenigstens eine Vertiefung des Gegenverbindungsabschnitts sichert, während sie in ihrer Freigabestellung mit ihrem zweiten axialen Abschnitt ein Herausfallen der Verriegelungselemente aus den Durchbrechungen verhindert. Auf diese Art und Weise kann im entriegelten Zustand der Verbindungseinheit ein Verlust der Verriegelungselemente in einfacher Weise verhindert werden.

Zur Bereitstellung einer fluiddichten Verbindung von Grundkörper und Anschlussstutzen wird vorgeschlagen, dass zwischen dem Grundkörper und dem Anschlussstutzen, vorzugsweise zwischen dem Verbindungsabschnitt des Grundkörpers und dem Gegenverbindungsabschnitt des Anschlussstutzens, eine Aufnahmekammer zur Aufnahme wenigstens eines Dichtungsrings vorgesehen ist. Hierbei ist es möglich, die Aufnahmekammer als Ausnehmung im Anschlussstutzen oder/und im Grundkörper vorzusehen. Ferner ist es von Vorteil, wenn die Dichtungsringaufnahmeaussparung wenigstens eine polierte Oberfläche, vorzugsweise im Bereich des Gegenverbindungsabschnitts, aufweist. Hierdurch kann ein beschädigungsfreies Aufschieben der Dichtungsringe erleichtert werden. Um eine gleichbleibende Dichtheit der Verbindungseinheit bei verschiedensten Betriebsbedingungen sicherzustellen, kann es vorteilhaft sein, wenigstens zwei Dichtungsringe vorzusehen, welche durch wenigstens eine Zwischenlegescheibe getrennt sind, wobei wenigstens einer der Dichtungsringe aus HNBR (hydrierter Acrylnitrilbutadien-Kautschuk) oder EPDM (Ethylenpropylendien-Kautschuk) und wenigstens einer aus FKM (Flour-Kautschuk) hergestellt sein kann.

In einer vorteilhaften Ausführungsform kann neben dem Grundkörper auch der Anschlussstutzen oder/und die Schiebehülse oder/und gegebenenfalls auch die Verriegelungselemente aus einem Kunststoff, insbesondere einem. Glasfaser-verstärktem Kunststoff, gefertigt sein. Solche Kunststoffteile können in großer Zahl kostengünstig mittels eines Spritzgussverfahrens hergestellt werden, und erreichen dennoch eine zufriedenstellende Festigkeit. Hinsichtlich der Verriegelungselemente ist es alternativ jedoch auch denkbar, diese aus Metall, insbesondere aus Stahl oder Aluminium, oder einer Metalllegierung zu fertigen. Diese Maßnahme würde gegenüber Verriegelungselementen aus Kunststoff eine weiter erhöhte Haltekraft ermöglichen.

Um die Handhabung der Schiebehülse erleichtern zu können, kann vorgesehen sein, die Schiebehülse an ihrer radialen Außenseite mit einer Oberflächenstruktur oder/und aus einer weichen Materialkomponente, beispielsweise TPE-Kunststoff (thermoplastischer Elastomer-Kunststoff) zu fertigen. Die Oberflächenstruktur der Schiebehülse kann dabei beispielsweise in Form von Rippen, Noppen oder dergleichen ausgebildet sein.

Aus Kunststoff gefertigte erfindungsgemäße Verbindungseinheiten können für eine Verwendung in einem Druckbereich bis 30 bar, vorzugsweise zwischen 15 bar und 30 bar vorgesehen sein. Dies ist ein Druckbereich, welcher für aus Kunststoff gefertigte Verbindungseinheiten als Hochdruck anzusehen ist.

Zu den Verriegelungselemente ist noch nachzutragen, dass deren Gestalt relativ frei gewählt werden. Beispielsweise könnte Kugeln oder kreiszylindrische Wälzkörper als Verriegelungselemente verwendet werden, wobei bei den kreiszylindrischen Wälzkörpern eine Orientierung der Wälzkörperachsen in bezüglich des Umfangs tangentialer Richtung vorteilhaft ist, um das Verbinden und Lösen von Anschlussstutzen und Grundkörper zu erleichtern. Grundsätzlich ist aber auch eine Orientierung der Wälzkörperachsen in Montagerichtung denkbar, wenn das Hauptaugenmerk auf eine leichte Verdrehbarkeit von Anschlussstutzen und Grundkörper um die Montagerichtung gerichtet ist. Schließlich kann auch an den Einsatz von kubischen oder quaderförmigen Verriegelungselementen gedacht werden.

Die erfindungsgemäßen Verbindungseinheiten mit gesondert von Grundkörper und Anschlussstutzen ausgebildeten Verriegelungselementen können in verschiedensten technischen Bereichen Verwendung finden, beispielsweise im Automobilbau, und hier insbesondere im Bereich von Kühlsystemen von Batterien.

Die Erfindung wird im Folgenden an einem Ausführungsbeispiel anhand der beigefügten Zeichnungen näher erläutert werden. Es stellt dar:
- Figur 1: eine Seitenansicht einer erfindungsgemäßen Verbindungseinheit in Explosionsdarstellung;
- Figur 2: die Explosionsdarstellung aus Figur 1 in schräger Draufsicht;
- Figur 3: eine Seitenansicht einer erfindungsgemäßen Verbindungseinheit in verbundenem Zustand;
- Figur 4: einen Querschnitt durch die Verbindungseinheit im Bereich der Verriegelungselemente;
- Figuren 5 und 6: Längsschnitte durch die Verbindungseinheit im verbundenen Zustand; und
- Figur 7: eine vergrößerte Darstellung eines Durchbrechungsbereichs des Grundkörpers aus den Figuren 1 und 2.

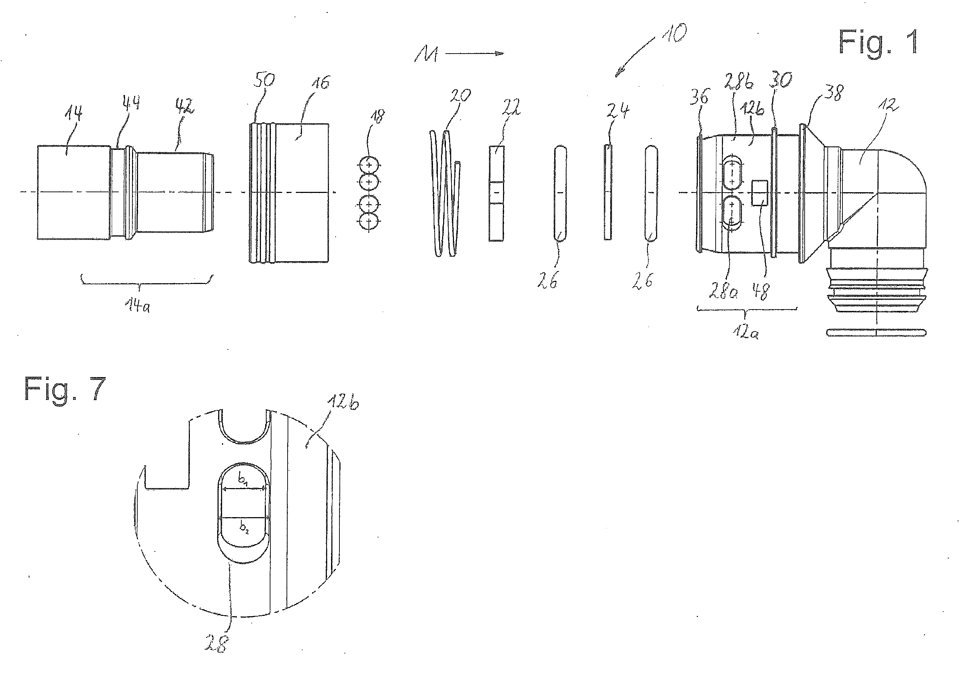

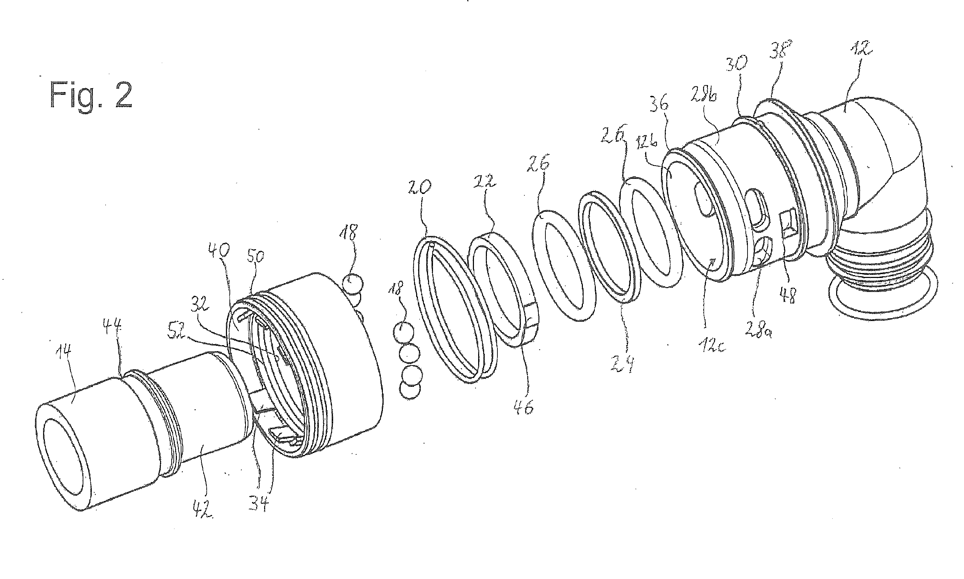

In Figuren 1 und 2 ist eine erfindungsgemäße Verbindungseinheit ganz allgemein mit 10 bezeichnet. Sie umfasst einen Grundkörper 12, welcher einen Verbindungsabschnitt 12a mit einer Umfangswandung 12b und einer von dieser umgrenzten Verbindungsausnehmung 12c aufweist, einen Anschlussstutzen 14 mit einem Gegenverbindungsabschnitt 14a, welcher zur Herbeiführung eines verbundenen Zustands der Verbindungseinheit 10 in die Verbindungsausnehmung 12c einführbar ist, eine Schiebehülse 16 und Verriegelungselemente 18. In der gezeigten Verbindungseinheit 10 sind acht Verriegelungselemente 18 und zwei sich an dem Verbindungsabschnitt 12a gegenüberliegende Durchbrechungsabschnitte vorgesehen, die jeweils wiederum zwei Durchbrechungen 28a umfassen, die durch einen schmalen, nicht durchbrochenen Bereich getrennt sind. Zwischen den Durchbrechungsabschnitten finden sich vollständig durchbrechungsfreie Umfangsabschnitte 28b.

Ferner sind eine Feder 20, Zwischenlegscheiben 22 und 24 sowie Dichtungsringe 26 vorgesehen.

Um die Verbindungseinheit 10 zu verbinden, wird man zuerst die Verriegelungselemente 18 in die dafür vorgesehenen Durchbrechungen 28a in der Umfangswandung 12b des Grundkörpers 12 einlegen. Die Durchbrechungen 28a sind so ausgeführt, dass ein Nach-Innen-Fallen der Verriegelungselemente 18 verhindert wird. Da in diesem Ausführungsbeispiel die Verriegelungselemente 18 als Kugeln ausgeführt sind, entspricht die Form der Durchbrechungen 28a abschnittsweise einem Teil eines Kugelumfangs. Nachfolgend werden die Feder 20 und die Schiebehülse 16 auf den Grundkörper 12 aufgeschoben, woraufhin die Feder 20 an einem Kragen 30 des Grundkörpers und andererseits an einer Anlagefläche 32 (in Figur 2 zu sehen) der Schiebehülse 16 anliegt, und die Schiebehülse 16 entgegen der Einführrichtung M des Anschlussstutzens 14 vorspannt. Hierbei verhindert ein Zusammenwirken der Rastzungen 34 der Schiebehülse 16 mit einem Rastanschlag 36 des Grundkörpers 12, dass sich die Schiebehülse 16 wieder von dem Grundkörper 12 trennt. In diesem Zustand liegt nun der Bereich 52 der Schiebehülse 16, welcher einen verringerten Innendurchmesser aufweist, radial außerhalb im axialen Bereich der Verriegelungselemente 18, und fixiert diese in Richtung nach radial außen. Somit ist momentan ein Verbinden der Verbindungseinheit 10 nicht möglich. Zieht nun allerdings ein Benutzer die Schiebehülse 16 in die in Figur 1 mit M bezeichnete Richtung, bis die Schiebehülse 16 an dem Kragen 38 des Grundkörpers 12 zum Anschlag kommt, so liegen die Verriegelungselemente 18 nun im Bereich 40 der Schiebehülse 16 mit einem vergrößerten Innendurchmesser, und sind soweit radial nach außen bewegbar, dass ein Einführen des Anschlussstutzens 14 möglich wird. Um das Greifen der Schiebehülse 16 zu erleichtern, sind an ihrer radialen Außenseite Rippen 50 vorgesehen.

Vor dem Einführen des Anschlussstutzens 14 können auf dessen vorderem Bereich 42, welcher einen verringerten Außendurchmesser aufweist, die Dichtungsringe 26, sowie die Zwischenlegscheiben 22 und 24 aufgestülpt werden. Um hierbei eine Beschädigung insbesondere der Dichtungsringe 26 zu vermeiden, kann der Bereich 42 besonders glatt ausgeführt sein. Der Anschlussstutzen 14 kann nun soweit in die Verbindungsausnehmung 12c des Grundkörpers 12 eingeführt werden, bis er an einer nicht gezeigten Gegenfläche innerhalb der Verbindungsausnehmung 12c zur Anlage kommt. Bei dieser Eindringtiefe sind die Verriegelungselemente 18 innerhalb der Durchbrechungen 28a der Umfangswandung 12b des Grundkörpers 12 mit der Vertiefung 44 des Anschlussstutzens 14 ausgerichtet, und ebenso kann der Vorsprung 46 an der Zwischenlegescheibe 22 in einer weiteren Durchbrechung 48 der Umfangswandung 12b des Grundkörpers 12 einliegen. Lässt der Benutzer nun die Schiebehülse 16 los, so wird sie durch die Rückstellkraft der Feder 20 zurück in den verriegelten Zustand gedrückt, und fixiert mit ihrem Bereich 52 verringerten Innendurchmessers die Verriegelungselemente 16 radial nach außen. Somit liegt nun ein verbundener und verriegelter Zustand der Verbindungseinheit 10 vor.

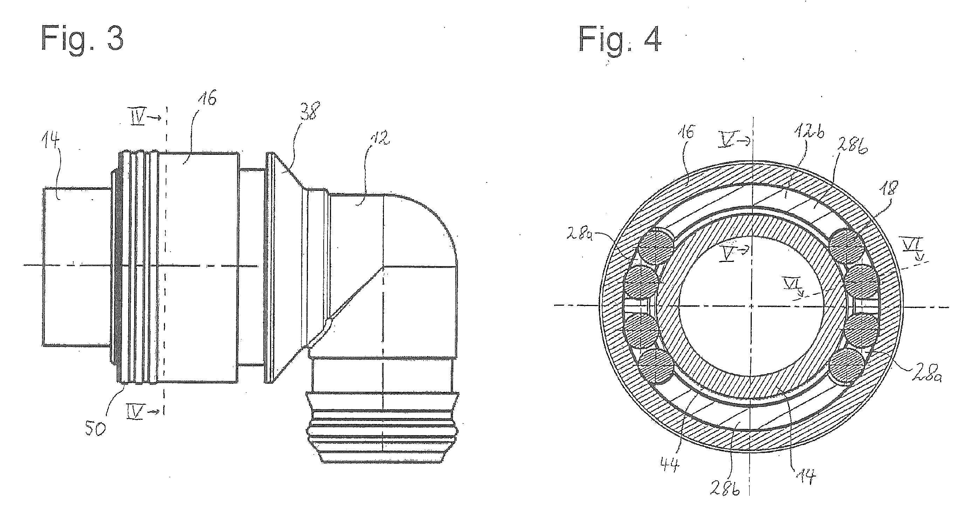

Der verbundene und verriegelte Zustand ist insbesondere auch in Figur 3 gezeigt. Hier kann auch der freie Weg zwischen der Schiebehülse 16 in gesichertem Zustand und dem Kragen 38 erkannt werden, um den die Schiebehülse 16 gegen die Federkraft bewegt werden kann, um so die Verriegelungselemente 18 nach außen wieder freizugeben und ein Öffnen der Verbindungseinheit 10 wie oben beschrieben zu erlauben.

Figur 4 zeigt einen Querschnitt durch die verbundene und verriegelte Verbindungseinheit 10 entlang der Linie IV aus Figur 3, wobei sich der Schnitt insbesondere im Bereich der Vertiefung 44 des Anschlussstutzen befindet. In Figur 4 ist gut zu erkennen, wie die Verriegelungselemente 18 in definierten Durchbrechungen 28a der Umfangswandung 12b des Grundkörpers 12 einliegen, die sich in dem gezeigten Ausführungsbeispiel über Winkelbereiche von jeweils etwa 90° erstrecken. Ebenfalls sind die vollständig durchbrechungsfreien Umfangsabschnitte 28b zu erkennen, die zwischen den Durchbrechungsbereichen liegen. Da in Figur 4 der Anschlussstutzen 14 im Bereich der Aufnahme 44 gezeigt ist, ist zu erkennen, dass zwischen dem Anschlussstutzen 14 und dem Grundkörper 12 ein gewisser Abstand vorliegt. Die Schiebehülse 16 hingegen liegt im Wesentlichen flächig an dem Außenumfang des Grundkörpers 12 und den Verriegelungselementen 18 an, und blockiert diese nach radial außen.

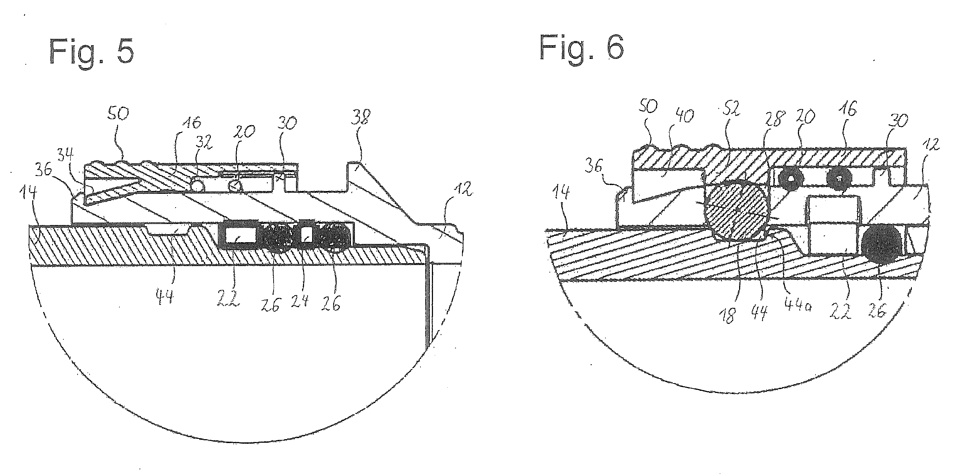

Die Figuren 5 und 6 zeigen Längsschnitte durch die verbundene und verriegelte Verbindungseinheit 10, wobei die Schnittebene in Figur 5 entlang der Achse V aus Figur 4 verläuft, und die Schnittebene in Figur 6 entlang der Linie VI aus Figur 4 verläuft. Hierbei ist festzuhalten, dass im Bereich der Schnittebene von Figur 5 die Schiebehülse 16 ein Rastelement 34 aufweist, welches in einer Gegenfläche 36 des Grundkörpers anliegt. In diesem Bereich ist die Umfangswandung 12b des Grundkörpers 12 durchbrechungsfrei ausgebildet und demnach liegen hier auch keine Verriegelungselemente 18 vor. Im Gegensatz hierzu ist in Figur 6 ein Schnitt durch einen Bereich gezeigt, in dem die Umfangswandung 12b des Grundkörpers 12 eine Durchbrechung 28a aufweist, in der ein Verriegelungselement 18 einliegt. Ferner ist in Figur 6 gut zu erkennen, dass das Verriegelungselement 18 ebenfalls in der Vertiefung 44 des Anschlussstutzens 14 einliegt und nach außen vom Bereich 52 mit verringertem Innendurchmesser der Schiebehülse 16 gehalten wird. Somit wird deutlich, dass ein Herausziehen des Anschlussstutzens 14 aus dem Grundkörper 12 in diesem Zustand unmöglich ist, da bei einem Versuch des Herausziehens die Kante 44a der Vertiefung mit dem Verriegelungselement 18 anschlägt. Des Weiteren ist in Figur 6 der Bereich 40 mit vergrößertem Innendurchmesser der Schiebehülse 16 zu erkennen, welcher sich, wenn der Benutzer die Schiebehülse 16 in Richtung des Kragens 38 des Grundkörpers gezogen hat, radial außerhalb der Verriegelungselemente 18 befindet, und diesen genug Spiel nach außen einräumt, dass ein Herausziehen des Anschlussstutzens 14 aus dem Grundkörper 12 möglich wird, indem die Kante 44a das Verriegelungselement 18 radial nach außen schieben und dann passieren kann.

Figur 7 ist eine vergrößerte Detailansicht einer Durchbrechung 28a in der Umfangswandung 12b des Grundkörpers 12. Die gezeigten Breiten b1 und b2 der Durchbrechung 28a entsprechen hierbei der Breite der Durchbrechung 28a an ihrer radialen Innenseite (b1) und ihrer radialen Außenseite (b2). Durch dieses nach radial innen zulaufende Profil wird verhindert, dass in nicht montiertem Zustand die Verriegelungselemente 18 nach radial innen in die Verbindungsausnehmung 12c des Grundkörpers 12 hineinfallen können.

## Patentansprüche

1. Verbindungseinheit (10), umfassend:
• einen Grundkörper (12), welcher einen Verbindungsabschnitt (12a) mit einer Umfangswandung (12b) und einer von dieser umgrenzten Verbindungsausnehmung (12c) aufweist;
• einen Anschlussstutzen (14) mit einem Gegenverbindungsabschnitt (14a), welcher zur Herbeiführung eines verbundenen Zustands der Verbindungseinheit (10) in die Verbindungsausnehmung (12c) einführbar ist;
• eine Mehrzahl von Verriegelungselementen (18),
wobei in der Umfangswandung (12b) des Grundkörpers (12) eine Mehrzahl von zur Aufnahme der Verriegelungselemente (18) bestimmten Durchbrechungsbereichen (28a) vorgesehen ist, innerhalb welcher die Umfangswandung (12b) wenigstens abschnittsweise durchbrochen ist, und zwischen denen in Umfangsrichtung vollständig durchbrechungsfreie Umfangsabschnitte (28b) vorgesehen sind;
wobei der Gegenverbindungsabschnitt (14a) des Anschlusstutzens (14) wenigstens eine Vertiefung (44) aufweist, in welche die Verriegelungselemente (18) im verbundenen Zustand der Verbindungseinheit (10) zur Herbeiführung eines verbundenen und verriegelten Zustands der Verbindungseinheit (10) einführbar sind; und
• eine den Grundkörper (12) umgreifende Schiebehülse (16), welche in der Verbindungsrichtung (M) zwischen einer Freigabestellung und einer Verriegelungsstellung bewegbar ist,
wobei die in ihrer Verriegelungsstellung angeordnete Schiebehülse (16) im verbundenen Zustand der Verbindungseinheit (10) den Eingriff der Verriegelungselemente (18) in die wenigstens eine Vertiefung (44) des Gegenverbindungsabschnitts (14a) und somit den verbundenen und verriegelten Zustand der Verbindungseinheit (10) sichert und
wobei die in der Freigabestellung angeordnete Schiebehülse (16) im verbundenen Zustand der Verbindungseinheit (10) eine Bewegung der Verriegelungselemente (18) aus der wenigstens einen Vertiefung (44) des Gegenverbindungsabschnitts (14a) heraus und somit die Überführung der Verbindungseinheit (10) in einen nicht verbundenen Zustand zulässt,
**dadurch gekennzeichnet, dass** der Grundkörper (12) aus Kunststoff gefertigt ist und dass sich die Durchbrechungsbereiche (28a) in der Umfangswandung (12b) des Verbindungsabschnitts (12a) des Grundkörpers (12) in Umfangsrichtung insgesamt über höchstens 240° erstrecken, wobei die durchbrechungsfreien Umfangsabschnitte (28b) eine Umfangserstreckung von jeweils wenigstens 40° aufweisen.

2. Verbindungseinheit nach Anspruch 1,
**dadurch gekennzeichnet, dass** in der Umfangswandung (12b) des Verbindungsabschnitts (12a) des Grundkörpers (12) zwei sich diametral gegenüberliegende Durchbrechungsbereiche (28a) für Verriegelungselemente (18) vorgesehen sind, von denen sich jeder in Umfangsrichtung über einen Winkel von zwischen 45° und 120° erstreckt.

3. Verbindungseinheit nach Anspruch 1 oder 2,
**dadurch gekennzeichnet, dass** jeder der Durchbrechungsbereiche (28a) zur Aufnahme einer Mehrzahl von Verriegelungselementen (18) eingerichtet ist.

4. Verbindungseinheit nach Anspruch 3,
**dadurch gekennzeichnet, dass** jeder der Durchbrechungsbereiche (28a) wenigstens zwei durch einen schmalen Steg voneinander getrennte Durchbrechungen (28a) umfasst ist.

5. Verbindungseinheit nach einem der vorhergehenden Ansprüche,
**dadurch gekennzeichnet, dass** der Anschlussstutzen (14) im verbundenen Zustand der Verbindungseinheit (10) mit einer axial gerichteten Anlagefläche an einer zugeordneten Gegenfläche des Grundkörpers (12) derart zusammenwirkt, dass die in den Durchbrechungen (28a) aufgenommenen Verriegelungselemente (18) in axialer Richtung zu der wenigstens einen Vertiefung (44) ausgerichtet sind.

6. Verbindungseinheit nach einem der vorhergehenden Ansprüche,
**dadurch gekennzeichnet, dass** die wenigstens eine Vertiefung (44) als Nut ausgebildet ist, welche sich über den gesamten Umfang des Gegenverbindungsabschnitts (14a) erstreckt.

7. Verbindungseinheit nach einem der Ansprüche 1 bis 5,
**dadurch gekennzeichnet, dass** in dem Gegenverbindungsabschnitt (14a) eine Mehrzahl von Vertiefungen (44) zur Aufnahme der Verriegelungselemente (18) vorgesehen ist.

8. Verbindungseinheit nach einem der vorhergehenden Ansprüche,
**dadurch gekennzeichnet, dass** die Fläche der Mündungsöffnung der Durchbrechungen (28a) an der radial inneren Seite der Umfangswandung des Grundkörpers kleiner ist als die größte Querschnittsfläche der Verriegelungselemente (18).

9. Verbindungseinheit nach einem der vorhergehenden Ansprüche,
**dadurch gekennzeichnet, dass** die Schiebehülse (16) wenigstens ein Rastelement (34) aufweist, welches mit einem zugeordneten Rastanschlag (36) des Grundkörpers (12) zusammenwirkt.

10. Verbindungseinheit nach einem der vorhergehenden Ansprüche,
**dadurch gekennzeichnet, dass** sie ferner eine Druckfeder (20) umfasst, welche sich einenends an dem Grundkörper (12) und andernends an der Schiebehülse (16) abstützt und die Schiebehülse (16) in deren Verriegelungsstellung vorspannt.

11. Verbindungseinheit nach einem der vorhergehenden Ansprüche,
**dadurch gekennzeichnet, dass** die Schiebehülse (16) wenigstens zwei axiale Abschnitte (52, 40) umfasst, wobei die Innenwand der Schiebehülse (16) in einem ersten axialen Abschnitt (52) zumindest in einem den Durchbrechungen (28a) zugeordneten Umfangsabschnitt weiter nach radial innen vorsteht als die Innenwand der Schiebehülse (16) in einem zweiten axialen Abschnitt (40), und zwar vorzugsweise derart, dass die Schiebehülse (16) in ihrer Verriegelungsstellung mit ihrem ersten axialen Abschnitt (52) den Eingriff der Verriegelungselemente (18) in die wenigstens eine Vertiefung (44) des Gegenverbindungsabschnitts (14a) sichert, während sie in ihrer Freigabestellung mit ihrem zweiten axialen Abschnitt (40) ein Herausfallen der Verriegelungselemente (18) aus den Durchbrechungen (28a) verhindert.

12. Verbindungseinheit nach einem der vorhergehenden Ansprüche,
**dadurch gekennzeichnet, dass** zwischen dem Grundkörper (12) und dem Anschlussstutzen (14), vorzugsweise zwischen dem Verbindungsabschnitt (12a) des Grundkörpers (12) und dem Gegenverbindungsabschnitt (14a) des Anschlussstutzens (14), eine Aufnahmekammer (42) zur Aufnahme wenigstens eines Dichtungsrings (26) vorgesehen ist.

13. Verbindungseinheit nach einem der vorhergehenden Ansprüche,
**dadurch gekennzeichnet, dass** der Anschlussstutzen (14) oder/und die Schiebehülse (16) oder/und gegebenenfalls die Verriegelungselemente (18) aus Kunststoff, insbesondere einem glasfaserverstärkten Kunststoff, gefertigt sind.

14. Verbindungseinheit nach einem der vorhergehenden Ansprüche,
**dadurch gekennzeichnet, dass** die Verriegelungselemente (18) aus Metall, insbesondere aus Stahl oder Aluminium, oder einer Metalllegierung gefertigt sind.

15. Verbindungseinheit nach einem der vorhergehenden Ansprüche,
**dadurch gekennzeichnet, dass** die Schiebehülse (16) an ihrer radialen Außenseite mit einer Oberflächenstruktur (50) oder/und aus einer weichen Materialkomponente, beispielsweise TPE-Kunststoff, gefertigt ist.

16. Verwendung einer Verbindungseinheit nach Anspruch 1 und Anspruch 13 und gegebenenfalls weiteren Merkmalen aus den Ansprüchen 2 bis 12, 14 und 15,
**dadurch gekennzeichnet, dass** die Verbindungseinheit in einem Druckbereich bis 30 bar, vorzugsweise zwischen 15 bar und 30 bar, eingesetzt wird.
